# EUROPEAN PATENT APPLICATION

(11) **EP 4 808 067 A1**
(43) Date of publication of application: **16.09.2026**
(21) Application number: 26163365.5
(22) Date of filing: 09.03.2026
(51) Int. Cl.: H04L 43/0811, H04L 43/10, H04L 41/0853, H04L 43/103

(54) **LINK DETECTION METHOD, SYSTEM, AND APPARATUS**

(30) Priority: 14.03.2025 CN 202510309264
(71) Applicant: HUAWEI TECHNOLOGIES CO., LTD., Shenzhen 518129 (CN)
(72) Inventor: JIANG, Youjun, Shenzhen, 518129 (CN); LE, Weijun, Shenzhen, 518129 (CN); LI, Yan, Shenzhen, 518129 (CN); SUN, Wenhao, Shenzhen, 518129 (CN)
(74) Representative: Pfenning, Meinig & Partner mbB

(57) **Abstract**

This application relates to the field of communication technologies, and provides a link detection method, a system, and an apparatus. The method includes: for any network link (which may be referred to as a first link) between any two interconnected network devices, when a service packet needs to be transmitted between the two network devices in a time window, determining a status of the first link by transmitting the service packet; or when no service packet needs to be transmitted between the two network devices in a time window, determining a status of the first link by actively generating and transmitting link detection information. In this way, a link fault can be detected in a time window with relatively short duration, and there is no need to preempt a service packet, thereby ensuring normal transmission of the service packet.

## Description

### TECHNICAL FIELD

This application relates to the field of communication technologies, and specifically, to a link detection method, a system, and an apparatus.

### BACKGROUND

With continuous expansion of network scales and continuous raising of service requirements, high reliability of network links has become a core requirement in scenarios such as industrial networks, data centers, and 5G communication. A network link fault is an important factor that affects network reliability. If the network link fault is not detected and located in a timely and accurate manner, problems such as service interruption, data loss, and network breakdown may occur.

In a network such as the Ethernet, a network device may periodically and actively send a protocol packet based on a protocol such as connectivity fault management (Connectivity Fault Management, CFM) used for fault detection, to implement network link fault detection. However, actively sending a periodic protocol packet occupies a relatively large network link bandwidth, and affects service packet transmission. In addition, a fault detection interval is usually limited to be not too small, and it is difficult to further improve a fault detection speed.

### SUMMARY

This application provides a link detection method, a system, and an apparatus, to accurately and efficiently detect a link fault in a network.

According to a first aspect, a fault detection method is provided, and the method may be performed by a first communication apparatus. The method includes: performing fault detection on a first link between the first communication apparatus and a second communication apparatus based on the following conditions: condition 1: link detection information sent by the second communication apparatus is not received but a service packet sent by the second communication apparatus is received through the first link in one time window; condition 2: a service packet sent by the second communication apparatus is not received but link detection information sent by the second communication apparatus is received through the first link in one time window; and condition 3: no data sent by the second communication apparatus is received through the first link in N consecutive time windows, where N is an integer greater than or equal to 2. When the condition 1 or the condition 2 is met, it is determined that the first link is normal. When the condition 3 is met, it is determined that a link fault occurs on the first link.

In the method provided in this application, the first communication apparatus and the second communication apparatus may be respectively implemented on two interconnected network devices. For any network link (which may be referred to as the first link) between any two interconnected network devices, a time window may be flexibly configured, so that a link status can be detected in a minimum of one time window, thereby shortening a fault detection time. In addition, in a time window, when a service packet is transmitted between the first communication apparatus and the second communication apparatus, whether the link is normal is directly determined based on whether the first communication apparatus receives the service packet, and when no service packet is transmitted, whether the link is normal is determined based on whether the first communication apparatus receives link detection information. This method can ensure relatively accurate detection of the link status, and there is no need to periodically and actively transmit a dedicated packet used for fault detection to preempt a service packet, thereby ensuring normal transmission of the service packet. In addition, based on the first communication apparatus receiving, in a plurality of time windows, no data sent by the second communication apparatus, it can be more accurately determined that a link fault occurs on the first link. This avoids a case in which it is incorrectly determined that a link fault occurs on the first link because the first communication apparatus does not receive data in a time window due to a transmission delay, network quality fluctuation of the link, or the like.

In a possible implementation, the link detection information may be carried in a preamble.

In this embodiment, using the link detection information carried in the preamble can be compatible with an Ethernet standard, so that all network devices in the Ethernet can support reception of the link detection information, and the solution has relatively high universal applicability.

In another possible implementation, the link detection information is from a reconciliation sublayer RS.

In a network model, information/data generated and sent by the RS may not be limited by an Ethernet packet format defined in the Ethernet standard such as IEEE 802.3 (one Ethernet frame includes at least 84 bytes in consideration of a preamble and an inter-packet gap). In this way, in this embodiment, the link detection information sent by using the RS may not be limited by the Ethernet packet format, and a size of the link detection information may be relatively small, for example, 16 bytes, 8 bytes, or 5 bytes. In this way, in this embodiment, a data volume of the link detection information is relatively small, a quantity of bandwidth resources consumed for transmitting the link detection information may be relatively small, and a transmission speed may be higher, so that bandwidth resources occupied in a link fault detection process can be further reduced, and a link fault detection speed can be increased.

In another possible implementation, the method further includes: configuring duration of the time window based on one or more of a maximum transmission unit MTU, a link bandwidth, and a link idle duration threshold.

The MTU refers to a maximum size of a data packet that can be transmitted over a network. Both the MTU and the link bandwidth affect duration required for transmitting the service packet or the link detection information. In this embodiment, the time window is configured based on the MTU, the link bandwidth, and the link idle duration threshold, to ensure that the duration required for transmitting the service packet or the link detection information is less than duration of one time window and is greater than the link idle duration threshold. In this way, when the first link is normal, it is ensured that the first communication apparatus can receive at least one service packet or link detection information from the second communication apparatus in one time window. This better ensures accuracy of fault detection, and avoids a case in which it is incorrectly determined that a fault occurs on the first link because data from the second communication apparatus cannot be received in a plurality of time windows due to inappropriate configuration of the duration of the time window (for example, the duration is too short).

In another possible implementation, the method further includes: adjusting the duration of the time window based on one or more of an updated MTU, an updated link bandwidth, and an updated link idle duration threshold.

The MTU, the link bandwidth of the first link, and the link idle duration threshold of the first link may change. In this embodiment, adjusting the duration of the time window based on the updated MTU, the updated link bandwidth, and the updated link idle duration threshold can ensure that duration configuration of the time window is adjusted in a timely manner when a transmission parameter changes, to better ensure accuracy of fault detection.

In another possible implementation, the link detection information further includes link capability information of the second communication apparatus. The method further includes: implementing link capability negotiation between the first communication apparatus and the second communication apparatus based on the link capability information.

According to this embodiment, in addition to link fault detection, the link capability information sent by the second communication apparatus to the first communication apparatus can further implement link capability negotiation between the first communication apparatus and the second communication apparatus. Usage is more diversified, and application scenarios are wider. In addition, the link detection information can help the first communication apparatus and the second communication apparatus more efficiently complete a plurality of operations such as link fault detection and link capability negotiation.

In another possible implementation, the link capability information is carried in a type field indicating an information type and a field indicating information content.

The type field indicating the information type and the field indicating the information content can accurately indicate the link capability information, and are relatively common manners for carrying information. In this way, it is relatively easy to insert or add the link capability information to the link detection information, and after receiving the link detection information, the first communication apparatus can identify, based on the type field, the information type (link capability information) of the information content carried in the link detection information, thereby accurately obtaining the link capability information.

In another possible implementation, the link detection information includes a role type of the second communication apparatus. The method further includes: determining a role of the second communication apparatus and a role of the first communication apparatus based on the role type.

According to this embodiment, in addition to link fault detection, the link capability information sent by the second communication apparatus to the first communication apparatus can further determine role types of the second communication apparatus and the first communication apparatus. Usage is more diversified, and application scenarios are wider.

In another possible implementation, the role type is carried in a type field.

The type field can indicate a type. In this way, the role type is carried in the indication type field, so that it is relatively easy to insert or add the role type to the link detection information. In addition, after receiving the link detection information, the first communication apparatus can accurately obtain the role type of the second communication apparatus based on the type field.

In another possible implementation, the link detection information may further include a cyclic redundancy check CRC. The method further includes: checking the link detection information based on the CRC.

The CRC may be used to verify whether the link detection information and other information carried in the link detection information are damaged. After receiving the link detection information sent by the second communication apparatus, the first communication apparatus can find, in a timely manner based on the CRC, whether the link detection information and other information carried in the link detection information are damaged in a transmission process (for example, information distortion is caused by an accident such as a bit error), to ensure accuracy of the link detection information.

In another possible implementation, when M pieces of link detection information sent by the second communication apparatus are received in one time window or N consecutive time windows, and check results of the N pieces of link detection information are all incorrect, it is determined that communication quality of the first link is poor, where M is an integer greater than or equal to 2, and N is an integer greater than or equal to 2.

According to this embodiment, whether the communication quality of the first link is poor can be relatively accurately determined based on a check result of the link detection information. This can help perform timely processing when the communication quality of the first link is poor, and help ensure data security and accuracy in a data transmission process.

According to a second aspect, a fault detection method is provided, and the method may be performed by a second communication apparatus. The method includes: in any time window, when a service packet needs to be sent, sending the service packet to a first communication apparatus through a first link, and skipping generating link detection information. The method further includes: in any time window, when no service packet needs to be sent, actively generating link detection information, and sending the link detection information to a first communication apparatus through a first link.

Corresponding to the technical effect of the first aspect, for any network link (which may be referred to as the first link) between any two interconnected network devices, a time window may be flexibly configured, so that a link status can be detected in a minimum of one time window, thereby shortening a fault detection time. In addition, in a time window, when a service packet needs to be transmitted between the first communication apparatus and the second communication apparatus, the first communication apparatus directly sends the service packet through the first link to detect a status of the first link. When no service packet needs to be transmitted, the first communication apparatus actively generates and sends the link detection information through the first link to detect a status of the first link. This method can ensure relatively accurate detection of the link status, and there is no need to periodically and actively transmit a dedicated packet used for fault detection to preempt a service packet, thereby ensuring normal transmission of the service packet.

In a possible implementation, the method further includes: when idle duration of the first link is greater than or equal to a link idle duration threshold, actively generating the link detection information, and sending the link detection information to the first communication apparatus through the first link. The link idle duration threshold is less than duration of the time window.

When the first link is idle, no service packet is transmitted between the first communication apparatus and the second communication apparatus. If the idle duration of the first link is relatively long, it is unclear whether a link fault occurs on the first link. In this embodiment, when the idle duration of the first link is greater than or equal to the link idle duration threshold, the link detection information is actively generated in a timely manner and sent through the first link. This can further ensure relatively accurate detection of the link status.

In another possible implementation, the link detection information may be carried in a preamble.

In another possible implementation, the method further includes: sending the link detection information to the first communication apparatus through a reconciliation sublayer RS.

In another possible implementation, the method further includes: configuring duration of the time window based on one or more of a maximum transmission unit MTU, a link bandwidth, and a link idle duration threshold.

In another possible implementation, the method further includes: adjusting the duration of the time window based on one or more of an updated MTU, an updated link bandwidth, and an updated link idle duration threshold.

In another possible implementation, the link detection information may further include link capability information of the second communication apparatus.

In another possible implementation, the link capability information is carried in a type field indicating an information type and a field indicating information content.

In another possible implementation, the link detection information includes a role type of the second communication apparatus.

In another possible implementation, the role type is carried in a type field.

In another possible implementation, the link detection information may further include a cyclic redundancy check CRC.

For technical effects of any possible implementation of the second aspect, refer to the technical effects of the first aspect and the implementations of the first aspect.

According to a third aspect, a link detection method is provided, and the method may be performed by a first communication apparatus. The method includes:
when M pieces of link detection information sent by a second communication apparatus are received through a first link in one time window or N consecutive time windows, the link detection information includes a cyclic redundancy check CRC, and check results of the M pieces of link detection information that are checked based on the CRC are all incorrect, determining that communication quality of the first link is poor. M is an integer greater than or equal to 2, and N is an integer greater than or equal to 2.

According to this embodiment, whether the communication quality of the first link is poor can be relatively accurately determined based on a check result of the link detection information. This can help perform timely processing when the communication quality of the first link is poor, and help ensure data security and accuracy in a data transmission process. In addition, in a process of detecting the communication quality of the first link, a dedicated packet used for link detection does not need to be periodically and actively transmitted to preempt a service packet, thereby ensuring normal transmission of the service packet.

The link detection method provided in the third aspect and any possible implementation of the fault detection method provided in the first aspect may be used in combination.

According to a fourth aspect, a first communication apparatus is provided, including a transceiver module and a processing module, configured to implement the method implemented by the first communication apparatus in any one of the first aspect and the possible implementations of the first aspect, or configured to implement the method implemented by the first communication apparatus in the third aspect.

Specifically, the transceiver module is configured to receive data (including no service packet, link detection information, or the like) sent by a second communication apparatus to the first communication apparatus through a first link. The processing module is configured to perform fault detection on the first link between the first communication apparatus and the second communication apparatus based on the following conditions: condition 1: link detection information sent by the second communication apparatus is not received but a service packet sent by the second communication apparatus is received through the first link in one time window; condition 2: a service packet sent by the second communication apparatus is not received but link detection information sent by the second communication apparatus is received through the first link in one time window; and condition 3: no data sent by the second communication apparatus is received through the first link in N consecutive time windows, where N is an integer greater than or equal to 2. When the condition 1 or the condition 2 is met, it is determined that the first link is normal. When the condition 3 is met, it is determined that a link fault occurs on the first link.

Alternatively, the processing module is configured to detect communication quality of the first link based on the following condition: when M pieces of link detection information sent by the second communication apparatus are received through the first link in one time window or N consecutive time windows, the link detection information includes a cyclic redundancy check CRC, and check results of the M pieces of link detection information that are checked based on the CRC are all incorrect, determining that communication quality of the first link is poor. M is an integer greater than or equal to 2, and N is an integer greater than or equal to 2.

In a possible implementation, the link detection information may be carried in a preamble.

In another possible implementation, the link detection information is from a reconciliation sublayer RS.

In another possible implementation, the processing module is further configured to configure duration of the time window based on one or more of a maximum transmission unit MTU, a link bandwidth, and a link idle duration threshold.

In another possible implementation, the processing module is further configured to adjust the duration of the time window based on one or more of an updated MTU, an updated link bandwidth, and an updated link idle duration threshold.

In another possible implementation, the link detection information further includes link capability information of the second communication apparatus. The processing module is further configured to implement link capability negotiation between the first communication apparatus and the second communication apparatus based on the link capability information.

In another possible implementation, the link capability information is carried in a type field indicating an information type and a field indicating information content.

In another possible implementation, the link detection information includes a role type of the second communication apparatus. The processing module is further configured to determine a role of the second communication apparatus and a role of the first communication apparatus based on the role type.

In another possible implementation, the role type is carried in a type field.

According to a fifth aspect, a second communication apparatus is provided, including a transceiver module and a processing module, configured to implement the method implemented by the second communication apparatus in any one of the second aspect and the possible implementations of the second aspect. Specifically, the processing module is configured to: in any time window, when a service packet needs to be sent, indicate the transceiver module to send the service packet to a first communication apparatus through a first link, and not generate link detection information. The processing module is further configured to: in any time window, when no service packet needs to be sent, actively generate link detection information, and indicate the transceiver module to send the link detection information to a first communication apparatus through a first link. The transceiver module is configured to send data (including no service packet, link detection information, or the like) according to an indication of the processing module.

In a possible implementation, the processing module is further configured to: when idle duration of the first link is greater than a link idle duration threshold, actively generate the link detection information, and indicate the transceiver module to send the link detection information to the first communication apparatus through the first link. The link idle duration threshold is less than duration of the time window.

In another possible implementation, the link detection information may be carried in a preamble.

In another possible implementation, the processing module may be configured to indicate the transceiver module to send the link detection information to the first communication apparatus through a reconciliation sublayer RS. The transceiver module may be configured to send the link detection information to the first communication apparatus through the reconciliation sublayer RS.

In another possible implementation, the processing module is further configured to configure duration of the time window based on one or more of a maximum transmission unit MTU, a link bandwidth, and a link idle duration threshold.

In another possible implementation, the processing module may be further configured to adjust the duration of the time window based on one or more of an updated MTU, an updated link bandwidth, and an updated link idle duration threshold.

In another possible implementation, the link detection information further includes link capability information of the second communication apparatus.

In another possible implementation, the link capability information is carried in a type field indicating an information type and a field indicating information content.

In another possible implementation, the link detection information includes a role type of the second communication apparatus.

In another possible implementation, the role type is carried in a type field.

In another possible implementation, the link detection information may further include a cyclic redundancy check CRC.

According to a sixth aspect, a communication system is provided. The system includes a first communication apparatus and a second communication apparatus, the first communication apparatus is configured to perform the method according to any one of the first aspect and the possible implementations of the first aspect, and the second communication apparatus is configured to perform the method according to any one of the second aspect and the possible implementations of the second aspect.

According to a seventh aspect, a communication apparatus is provided. The communication apparatus includes a processor and a memory. The processor is configured to execute instructions stored in the memory, so that the communication apparatus performs the method implemented by any communication apparatus in any one of the fourth aspect and the possible implementations of the fourth aspect.

According to an eighth aspect, a computer program product is provided, including instructions. When the instructions are run on a processor, the fault detection method according to any one of the first aspect or the possible implementations of the first aspect is implemented, or the fault detection method according to any one of the second aspect or the possible implementations of the second aspect is implemented.

According to a ninth aspect, a computer-readable storage medium is provided, including computer program instructions. When the computer program instructions are executed by a communication apparatus, the communication apparatus performs the fault detection method according to any one of the first aspect or the possible implementations of the first aspect, or the fault detection method according to any one of the second aspect or the possible implementations of the second aspect.

In this application, based on implementations according to the foregoing aspects, the implementations may be further combined to provide more implementations.

The following description includes more specific content about the implementations provided in the foregoing aspects.

### BRIEF DESCRIPTION OF DRAWINGS

FIG. 1 is a diagram of a communication system according to an embodiment of this application;
FIG. 2 is a schematic flowchart of a fault detection method according to an embodiment of this application;
FIG. 3 is a diagram of Embodiment 1 of a fault detection method according to an embodiment of this application;
FIG. 4 is a diagram of Embodiment 2 of a fault detection method according to an embodiment of this application;
FIG. 5 is a diagram of Embodiment 3 of a fault detection method according to an embodiment of this application;
FIG. 6 is a diagram 1 of link detection information according to an embodiment of this application;
FIG. 7 is a diagram 2 of link detection information according to an embodiment of this application;
FIG. 8 is a diagram of modules of a communication apparatus according to an embodiment of this application;
FIG. 9 is a diagram 1 of a structure of a communication apparatus according to an embodiment of this application;
FIG. 10 is a diagram 2 of a structure of a communication apparatus according to an embodiment of this application; and
FIG. 11 is a diagram of a structure of a communication system according to an embodiment of this application.

### DESCRIPTION OF EMBODIMENTS

With continuous expansion of network scales and continuous raising of service requirements, high reliability of network links has become a core requirement in scenarios such as industrial networks, data centers, and 5G communication. A network link fault is an important factor that affects network reliability. If the network link fault is not detected and located in a timely and accurate manner, problems such as service interruption, data loss, and network breakdown may occur. After a network link fault is detected, network connectivity can be maintained in a timely manner by taking processing measures. For example, fault recovery technologies such as folding switchover and common fault switchover are used to recover network communication between devices in a timely manner.

In a network, a network device may periodically and actively send a dedicated packet based on a protocol used for fault detection, to perform network link fault detection. For example, in the Ethernet (Ethernet), a network device may periodically and actively send an operation, administration, and maintenance (operation, administration, and maintenance, OAM) packet to another network device based on an OAM protocol (the OAM protocol may include CFM), to detect a network link status and locate a network link fault. In addition, the network device generates and sends the OAM packet from a medium access control (Medium Access Control, MAC) layer.

The OAM packet uses a normal Ethernet packet format. According to the Ethernet protocol-based standard 802.3 released by the institute of electrical and electronics engineers (institute of electrical and electronics engineers, IEEE) (which may be referred to as IEEE 802.3 for short), a start part of an Ethernet frame (frame) includes a preamble field whose size is 8 bytes (which may also be usually referred to as a preamble, including a 7-byte preamble (preamble) and a 1-byte start frame delimiter (start frame delimiter, SFD)), and a middle part includes an Ethernet packet (which may be a data packet, packet) whose minimum size is 64 bytes, and an inter-packet gap (inter-packet gap, IPG) whose size is 12 bytes is added at the end. One Ethernet frame includes at least 84 bytes in consideration of a preamble and an inter-packet gap.

However, if the network device periodically and actively sends the dedicated packet, a relatively large network link bandwidth is occupied, and transmission of a service packet on the network link is affected. For example, if the network device periodically and actively sends the dedicated packet, more than 20% of a network link bandwidth may be occupied. 90% of the network link bandwidth needs to be used for service packet transmission. In this case, protocol packet transmission preempts service packet transmission, thereby increasing a service packet transmission delay and affecting normal service running. In addition, a time interval (that is, a fault detection interval) at which the network device periodically and actively sends the dedicated packet is usually limited to be not too small, for example, is usually greater than 0.3 ms (for example, is 3 ms/10 ms/20 ms/100 ms/1s). A smaller time interval indicates that a larger bandwidth is occupied, and another high-priority packet such as a service packet is more severely preempted. In this case, it is difficult to further shorten a fault detection time.

In some implementations, a network link fault may be detected through electrical port fault detection. For example, in the Ethernet, a network link fault may be detected through 1000BASE-T electrical port fault detection according to the standard 802.3 released by IEEE. Electrical port fault detection does not need to occupy a network link bandwidth and does not affect service packet transmission. However, electrical port fault detection takes a relatively long time. According to the standard 802.3 released by IEEE, electrical port fault detection takes 750 ms. Even if electrical port fault detection is optimized, it takes dozens of ms. It is difficult to further shorten the electrical port fault detection time. In addition, electrical port fault detection is applied to an electrical port, and an application scope is limited.

In some implementations, in the Ethernet, a fault detection sequence may be carried by using a reserved sequence of an MII interface defined in the IEEE 802.3 standard, and a network link fault is detected by sending the reserved sequence between network devices. In this manner, fault detection is relatively fast, and service packet transmission is not affected. However, the reserved sequence is user-defined, and a physical layer (Physical Layer, PHY) of the network device may support reception of the reserved sequence, or may not support reception of the reserved sequence. If the PHY does not support the reserved sequence, the reserved sequence cannot be normally transmitted. In this case, a method for detecting a network link fault based on a reserved sequence is not universally applicable.

This application provides a fault detection method, to quickly and accurately detect a network link status (for example, normal or link fault) and reduce impact on service packet transmission. In the fault detection method provided in this application, for any network link (which may be referred to as a first link) between any two interconnected network devices, when a service packet needs to be transmitted between the two network devices in a time window, a status of the first link is determined by transmitting the service packet; or when no service packet needs to be transmitted between the two network devices in a time window, a status of the first link is determined by actively generating and transmitting link detection information.

According to this solution, a time window may be flexibly configured to detect a link status in one time window, thereby shortening a fault detection time. In addition, when a service packet needs to be sent, a link status is determined based on the service packet; or when no service packet needs to be sent, a link status is determined based on actively generated link detection information. This can ensure relatively accurate link status detection, and it is unnecessary to periodically and actively send a protocol packet used for fault detection to preempt a service packet, thereby ensuring normal transmission of the service packet. In addition, this solution is not limited to a PHY, and is universally applicable.

The fault detection method provided in embodiments of this application is applicable to various types of networks such as the Ethernet, to perform fault detection on network links in the various types of networks. In embodiments of this application, the fault detection method is described in detail mainly by using the Ethernet as an example.

The fault detection method provided in embodiments of this application is also applicable to networks in various application scenarios, to perform fault detection on network links in the networks in the various application scenarios. For example, the method is applicable to a campus network, a data center network, a wide area network, a mobile network, a virtual private network, and the like.

The fault detection method provided in embodiments of this application is applicable to fault detection on links between various devices in a network. For example, the method is applicable to fault detection on various links such as a link between switches, a link between routers, a link between data center servers, and a link between user equipment and a network device in a network.

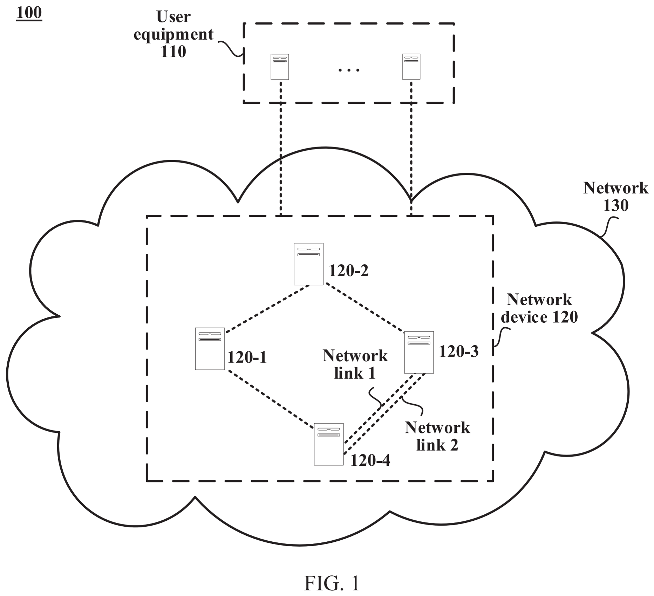

FIG. 1 is a diagram of a communication system according to an embodiment of this application. The communication system 100 may be configured to implement the fault detection method provided in embodiments of this application. FIG. 1 is merely a diagram of an architecture of a communication system according to an embodiment of this application. Location relationships between devices, components, modules, and the like shown in the figure do not constitute any limitation.

As shown in FIG. 1, the communication system 100 includes user equipment 110 and a network device 120.

The user equipment 110 is various devices available to a user, for example, various terminals such as a computer, a mobile phone, and a printer.

The network device 120 is a device configured to form a network 130, and may include a plurality of network devices, for example, a network device 120-1, a network device 120-2, a network device 120-3, a network device 120-4, ..., and the like. The network device can be connected to the network to implement interconnection and interworking between network devices, and data transmission can be performed after the network devices are interconnected. The network device may be various devices, modules, programs, or the like that can implement functions of the network device. The device may be, for example, a router or a switch.

The network 130 may be various types of networks such as the Ethernet. The network 130 may alternatively be networks in various application scenarios such as a campus network, a data center network, a wide area network, a mobile network, and a virtual private network. To meet communication requirements of organizations and enterprises with different scales and requirements, a network architecture of the network 130 may be further divided into a plurality of layers according to an actual requirement, and different layers play different roles and functions in networking of the network. For example, the network 130 includes an access layer, a convergence layer, and a core layer. Some of the plurality of network devices in the network devices 120 are located at the access layer, some are located at the convergence layer, and some are located at the core layer.

The network devices 120 in the network 130 may form a plurality of network topology structures, such as a ring, a star, a mesh, and a tree. FIG. 1 shows an example in which a plurality of network devices 120-1, 120-2, 120-3, 120-4, ..., and the like form a ring network topology.

One or more network links may exist between two interconnected network devices in the network devices 120. Interconnection between two network devices may include direct interconnection and indirect interconnection, and a network link may include a link between two directly interconnected network devices and a link between two indirectly interconnected network devices.

As shown in FIG. 1, a network link is represented by a connection line between network devices. The network link includes: a network link between the network device 120-1 and the network device 120-2 that are directly interconnected, a network link between the network device 120-2 and the network device 120-3 that are directly interconnected, two network links (a network link 1 and a network link 2) between the network device 120-3 and the network device 120-4 that are directly interconnected, and a network link "network device 120-1 -> network device 120-2 -> network device 120-3" and a network link "network device 120-1 -> network device 120-4 -> network device 120-3" between the network device 120-1 and the network device 120-3 that are indirectly interconnected.

The fault detection method provided in embodiments of this application may be used to detect any network link (which may be referred to as a first link) between any two interconnected network devices in a network (for example, in the network 130), to determine a status (for example, normal or link fault) of the network link.

The fault detection method provided in embodiments of this application may be cooperatively performed by a first communication apparatus and a second communication apparatus. The first communication apparatus and the second communication apparatus may be respectively implemented on two interconnected network devices. For example, the first communication apparatus is implemented on a network device (for example, the network device 120-1) in the communication system 100, and the second communication apparatus is implemented on another network device (for example, the network device 120-2) that is in the communication system 100 and that interworks with the network device in which the first communication apparatus is located.

The following describes in detail the fault detection method provided in embodiments of this application. For ease of understanding, in embodiments of this application, a fault detection method cooperatively performed by a plurality of communication apparatuses is described. Operations or steps performed by each communication apparatus may constitute an information reporting method performed by the communication apparatus. For example, operations or steps performed by the first communication apparatus constitute a fault detection method performed by the first communication apparatus, and operations or steps performed by the second communication apparatus constitute a fault detection method performed by the second communication apparatus.

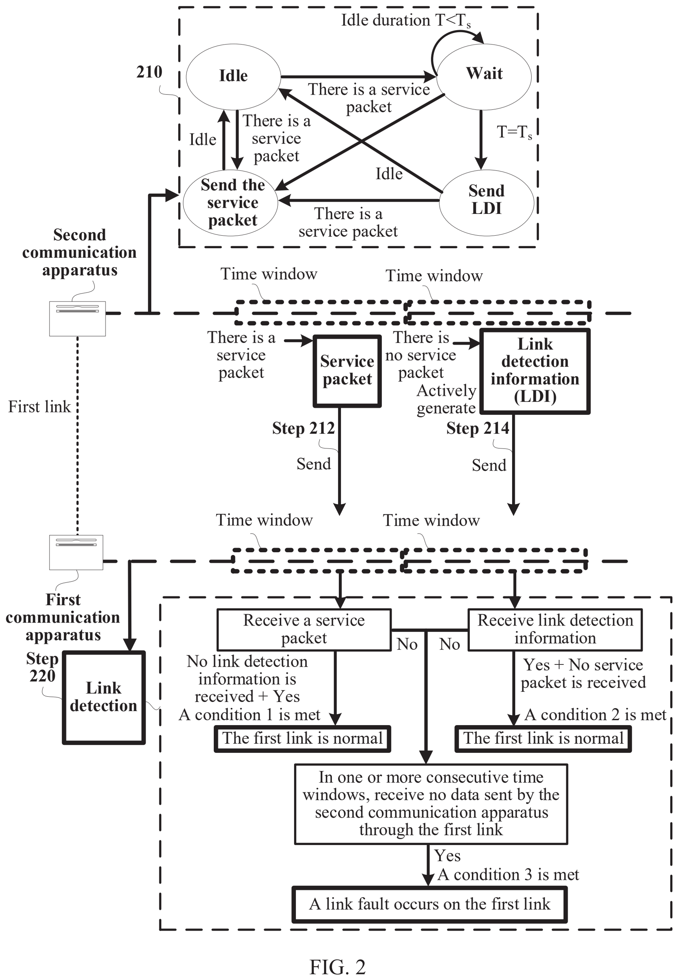

FIG. 2 is a schematic flowchart of a fault detection method according to an embodiment of this application. In the fault detection method provided in FIG. 2, a second communication apparatus is used as a data/information sender, and a first communication apparatus is used as a data/information receiver. In another implementation, the first communication apparatus may be used as a data/information sender to perform the following steps/operations performed by the second communication apparatus, and the second communication apparatus may be used as a data/information receiver to perform the following steps/operations performed by the first communication apparatus (that is, roles of the first communication apparatus and the second communication apparatus in the following method are exchanged). In addition, a detected first link between the first communication apparatus and the second communication apparatus may be a unidirectional link (which means that a data transmission direction is unidirectional, for example, from the second communication apparatus to the first communication apparatus, or from the first communication apparatus to the second communication apparatus), or may be a bidirectional link (which means that a data transmission direction is bidirectional).

As shown in FIG. 2, the method includes the following steps. The following step 212 and step 214 are steps performed in different cases, and there is no limitation on an execution sequence between step 212 and step 214.

Step 212: In any time window, when a service packet needs to be sent, the second communication apparatus sends the service packet to the first communication apparatus through the first link, and does not generate link detection information.

A format of the service packet may be a normal packet format of a network. Each type of network has a packet format specified in the network, and each standard of each type of network has a packet format specified in the standard. In this case, the format of the service packet in this embodiment of this application may be a packet format specified in various existing network types, various existing standards, various network types that may appear in the future, and various standards that may appear in the future.

For example, a network type is Ethernet. The service packet is in an Ethernet packet format, for example, a packet format defined in the Ethernet standard-IEEE 802.3: An Ethernet frame (frame) includes a preamble (including a preamble and an SFD, which are 8 bytes in total), an Ethernet packet (packet) (a minimum size is 64 bytes), and an inter-packet gap IPG (12 bytes). One Ethernet frame (frame) includes at least 84 bytes in consideration of a preamble and an inter-packet gap.

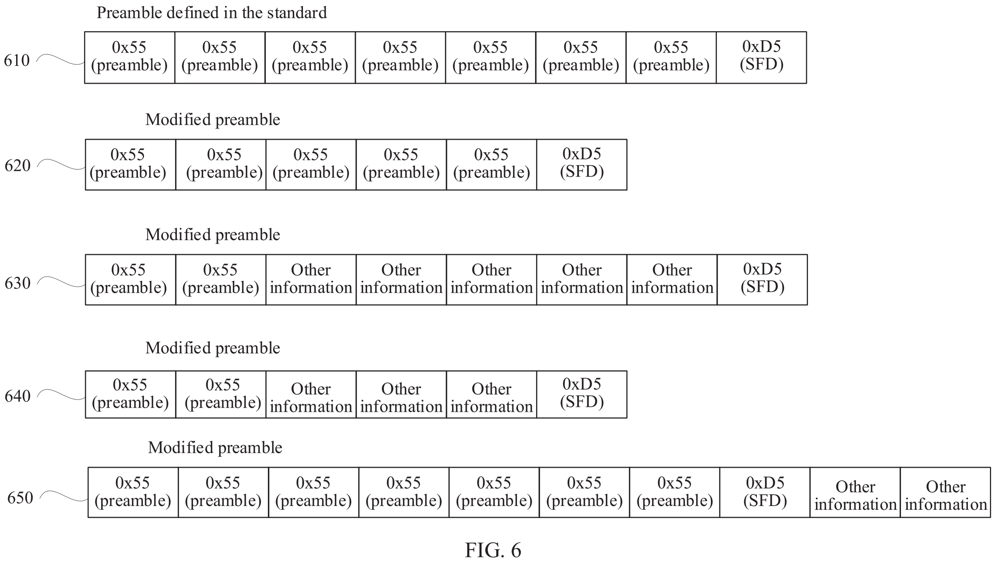

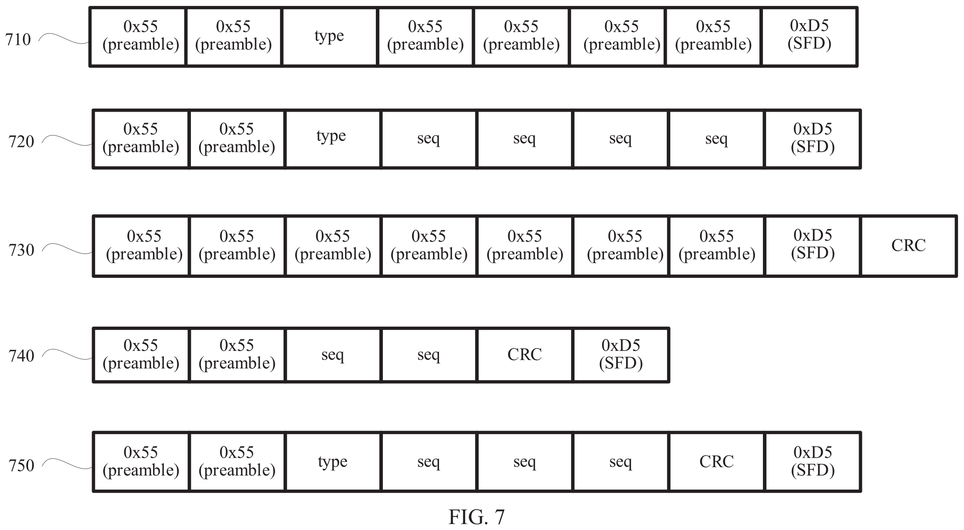

The link detection information (link detect information, LDI) may be information/data in a format different from that of the service packet in this embodiment of this application, and is used for link detection. For example, a network type is Ethernet. The link detection information may be information/data in a format such as a preamble defined in the Ethernet standard IEEE 802.3, or a preamble carrying a detection code. For more detailed descriptions of the link detection information, refer to FIG. 6, FIG. 7, and related descriptions thereof below.

In step 212 and step 214, the time window is a configured time range, and duration of the time window may be represented by T_{w}. In other words, a time period whose duration is T_{w} may be one time window. The duration T_{w} of the time window may be configured based on a requirement, and may be relatively short, for example, may be duration at an ms level (for example, 1 ms or 2 ms), or may be duration at a µs level (for example, 200 µs or 100 µs).

In this embodiment of this application, the time window may be flexibly configured to detect a status of the first link in one time window. In this way, a link fault detection time can be shortened as required, so that the fault detection time can be shortened to the µs level.

The network provides various data transmission services. When a data transmission service is performed, a network device in the network generates or receives a service packet, and needs to send the service packet to another network device, so that the service packet can be transmitted to a destination address. According to different requirements of the data transmission service, the service packet may be generated periodically or irregularly. In any time window, the network device may have no service packet that needs to be transmitted, or may have one or more service packets that need to be transmitted.

In step 212, in any time window, for a service packet that needs to be sent by a network device (which may be referred to as a second network device) in which the second communication apparatus is located to a network device (which may be referred to as a first network device) in which the first communication apparatus is located, the second communication apparatus may normally send the service packet to the first communication apparatus through the first link.

In a specific embodiment, in any time window, if the second network device in which the second communication apparatus is located has one service packet that needs to be sent to the first network device in which the first communication apparatus is located, the second communication apparatus sends the service packet to the first communication apparatus through the first link; or if the second network device in which the second communication apparatus is located has a plurality of service packets that need to be sent to the first network device, the second communication apparatus sends the plurality of service packets to the first communication apparatus through the first link.

In a specific embodiment, there may be one or more network links between the first network device and the second network device. When there is one network link, the second communication apparatus sends the service packet to the first communication apparatus through the link, and the link is the first link. When there are a plurality of network links, the second communication apparatus can determine, based on a configuration, a link to be used or determine, according to a link selection method, a link to be used to send the service packet to the first communication apparatus, and the link used is the first link.

In step 212, in a time window, the service packet sent by the second communication apparatus to the first communication apparatus through the first link can be used to detect the status of the first link, and link detection information other than the service packet does not need to be actively generated in this time window.

Step 214: In any time window, when no service packet needs to be sent, actively generate link detection information, and send the link detection information to the first communication apparatus through the first link.

In step 214, if the second network device in which the second communication apparatus is located has, for a period of time, no service packet that needs to be sent to the first network device in which the first communication apparatus is located, the second communication apparatus has no service packet that needs to be sent. In this case, the second communication apparatus may actively generate the link detection information, and send the generated link detection information to the first communication apparatus through the first link, to detect a status of the first link by using the link detection information. In this way, in any time window, when the second communication apparatus has no service packet that needs to be sent, the second communication apparatus actively generates the link detection information, and sends the link detection information to the first communication apparatus through the first link.

In a specific embodiment, there may be one or more network links between the first network device and the second network device. The first link used by the second communication apparatus to send the link detection information to the first communication apparatus is similar to the first link used by the second communication apparatus to send the service packet to the first communication apparatus. Refer to related descriptions in step 212.

In a specific embodiment, when idle duration of the first link is greater than a link idle duration threshold (which may be represented by Tₛ), the second communication apparatus may actively generate one piece of link detection information, and send the link detection information to the first communication apparatus through the first link. If the second communication apparatus does not have data such as a service packet that needs to be sent to the first communication apparatus, the first link is not used, and the first link is idle. The link idle duration threshold Tₛ is configured duration and may be configured as required. However, Tₛ needs to be less than the duration T_{w} of the time window.

In some embodiments, when the duration T_{w} of the time window is greater than or equal to n*Tₛ, where n is an integer greater than or equal to 2, if there is always no service packet that needs to be sent in a time window, n pieces of link detection information can be generated, and the n pieces of link detection information can be sent to the first communication apparatus through the first link.

210 in FIG. 2 is an example diagram of a state machine of a sender (for example, the second communication apparatus) in an execution process of a fault detection method. As shown in 210 in FIG. 2, when the first link is idle and idle duration T<Tₛ, the sender is in a waiting state. Then, if the sender has a service packet that needs to be sent to a receiver when the idle duration T of the first link is less than Tₛ, the sender sends the service packet to the receiver through the first link; or if the idle duration of the first link reaches T=Tₛ and the sender has no service packet that needs to be sent to the receiver, the sender actively sends link detection information LDI to the receiver through the first link.

Then, if the sender has a service packet that needs to be sent to the receiver, the sender sends the service packet to the receiver through the first link. Alternatively, then, if the first link is idle, the sender continues to switch a status in a manner like that described above. For example, then, the first link is idle, and the sender is in the waiting state again. Then, if the sender has a service packet that needs to be sent to the receiver when the idle duration T of the first link is less than Tₛ, the sender sends the service packet to the receiver through the first link; or if the idle duration of the first link reaches T=Tₛ and the sender has no service packet that needs to be sent to the receiver, the sender actively sends link detection information LDI to the receiver through the first link.

Step 220: The first communication apparatus performs link detection on the first link between the first communication apparatus and the second communication apparatus based on data that is sent by the second communication apparatus and that is received in a time window.

The time window in step 220 and the time windows in step 210 and step 214 may be a same time window.

In some embodiments, duration T_{w} of the time window in step 212, step 214, and step 220 may be configured based on one or more of a maximum transmission unit (maximum transmission unit, MTU) of the network, a link bandwidth of the first link, and a link idle duration threshold of the first link. The MTU refers to a maximum size of a data packet that can be transmitted over the network, and may be configured according to a requirement. For example, a size of the MTU is 1500 bytes, 1600 bytes, or the like. The size of the MTU of the network limits a maximum quantity of bytes of a packet that can be sent by a network device at a time.

In a specific embodiment, the duration T_{w} of the time window may be greater than duration (which may be represented by Tₘₜᵤ) required for transmitting the MTU on the first link. Tₘₜᵤ is related to the size of the MTU (for example, a quantity of bytes included in the MTU) and the link bandwidth of the first link. A larger size of the MTU and a smaller link bandwidth of the first link indicate larger Tₘₜᵤ, and Tₘₜᵤ may be approximately equal to (the size of the MTU/the link bandwidth of the first link). For example, the size of the MTU is 1500 bytes, and the bandwidth of the first link is 1 Gbps. Tₘₜᵤ is approximately equal to 12 µs. In addition, the duration T_{w} of the time window further needs to be greater than the link idle duration threshold Tₛ. In some embodiments, the duration T_{w} of the time window may be greater than or equal to a sum of Tₛ and Tₘₜᵤ. In this way, according to this embodiment, it can be ensured that the duration required for transmitting the service packet or the link detection information is less than duration of one time window and is greater than the link idle duration threshold. In this way, when the first link is normal, it is ensured that the first communication apparatus can receive at least one service packet or link detection information from the second communication apparatus in one time window. This better ensures accuracy of fault detection, and avoids a case in which it is incorrectly determined that a fault occurs on the first link because data from the second communication apparatus cannot be received in a plurality of time windows due to inappropriate configuration of the duration of the time window (for example, the duration is too short).

In some embodiments, the MTU, the link bandwidth of the first link, and the link idle duration threshold of the first link may change. The first communication apparatus and the second communication apparatus may further adjust the duration T_{w} of the time window based on one or more of an updated MTU, an updated link bandwidth, and an updated link idle duration threshold. For example, if the MTU changes, the updated MTU is greater than the MTU before update, and the link bandwidth and the link idle duration threshold remain unchanged, the duration T_{w} of the time window is increased.

In step 220, the first communication apparatus can determine, based on whether data sent by the second communication apparatus is received in the time window and a quantity of received service packets/fault detection information sent by the second communication apparatus, whether the first link is normal or a link fault occurs. The following describes a detailed method for determining the status of the first link by the first communication apparatus.

Case 1: When the first link is normal, in a time window, if the second communication apparatus performs step 212 to send one or more service packets to the first communication apparatus through the first link, the one or more service packets can be successfully sent to the first communication apparatus through the first link.

In this case, in step 220, it may be determined that the first link is normal when the following condition (which may be referred to as a condition 1) is met: In a time window, the first communication apparatus receives a service packet (which may be one or more service packets, and a quantity of received service packets may be determined based on a quantity of service packets sent by the second communication apparatus in one time window) sent by the second communication apparatus, but does not receive link detection information sent by the second communication apparatus through the first link.

Case 2: When the first link is normal, in a time window, if the second communication apparatus performs step 214 to send one or more pieces of link detection information to the first communication apparatus through the first link, the one or more pieces of link detection information can be successfully sent to the first communication apparatus through the first link.

In this case, in step 220, it may be determined that the first link is normal when the following condition (which may be referred to as a condition 2) is met: In a time window, the first communication apparatus does not receive a service packet sent by the second communication apparatus through the first link, but receives link detection information (which may be one or more pieces of link detection information, and a quantity of received link detection information may be determined based on a quantity of link detection information sent by the second communication apparatus in one time window) sent by the second communication apparatus.

Case 3: When a link fault occurs on the first link, in a time window, no data is successfully sent to the first communication apparatus through the first link regardless of whether the second communication apparatus performs step 212 to send one or more service packets to the first communication apparatus through the first link, or the second communication apparatus performs step 214 to send one or more pieces of link detection information to the first communication apparatus through the first link.

In this case, in step 220, it may be determined that a link fault occurs on the first link when the following condition (which may be referred to as a condition 3) is met: In one or more consecutive time windows, the first communication apparatus does not receive any data sent by the second communication apparatus through the first link.

In some embodiments, in a time window, when the first link is normal, the first communication apparatus may not receive data such as a service packet or link detection information sent by the second communication apparatus. For example, the second communication apparatus sends a service packet or link detection information through the first link in a first time window, but the first communication apparatus does not receive, in the first time window due to a transmission delay, network quality fluctuation of the link, or the like, the service packet or the link detection information sent by the second communication apparatus, but receives, in a second time window, the service packet or the link detection information sent by the second communication apparatus.

In this case, in step 220, based on the condition 3 that the first communication apparatus does not receive, in N consecutive time windows (N is an integer greater than or equal to 2), any data sent by the second communication apparatus through the first link, it can be more accurately determined that a link fault occurs on the first link, thereby avoiding a case in which it is incorrectly determined that a link fault occurs on the first link because the first communication apparatus does not receive data in the foregoing time window. A value of N may be configured according to a requirement, for example, N is 2 or 3.

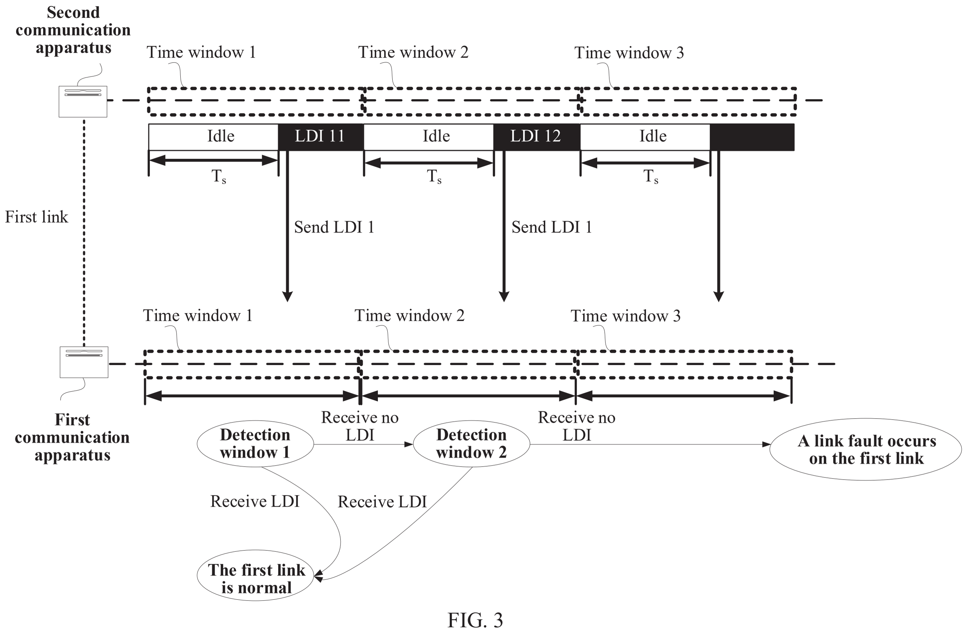

For ease of understanding, the following provides several examples of the fault detection method by using FIG. 3 to FIG. 5. In the following examples, the duration T_{w} of the time window is equal to the sum of Tₛ and Tₘₜᵤ.

FIG. 3 shows an example 1 of the fault detection method. In the example shown in FIG. 3, there is always no service packet that needs to be sent by the second communication apparatus to the first communication apparatus through the first link. As shown in FIG. 3, a plurality of consecutive time windows are shown: a time window 1, a time window 2, a time window 3, and the like.

In the time window 1, when the idle duration T of the first link reaches the link idle duration threshold Tₛ, the second communication apparatus actively generates one piece of link detection information LDI 11, and sends the LDI 11 to the first communication apparatus through the first link.

If the first communication apparatus receives the LDI 11 in the time window 1 (which may be referred to as a detection window 1), it may be determined that the first link is normal.

Then, the time window 2 is entered, and the idle duration T of the first link reaches the link idle duration threshold Tₛ again. The second communication apparatus actively generates one piece of link detection information LDI 12, and sends the LDI 12 to the first communication apparatus through the first link.

If the first communication apparatus receives the LDI 12 in the time window 2 (which may be referred to as a detection window 2), it may be determined that the first link is normal.

Then, the time window 3 is entered. The time window 3 and subsequent time windows are similar to the time windows 1 and 2.

In this example, if the first communication apparatus does not receive, in a plurality of consecutive time windows such as the time window 1 and the time window 2, or the time window 1, the time window 2, and the time window 3, data sent by the second communication apparatus through the first link, it may be determined that a link fault occurs on the first link.

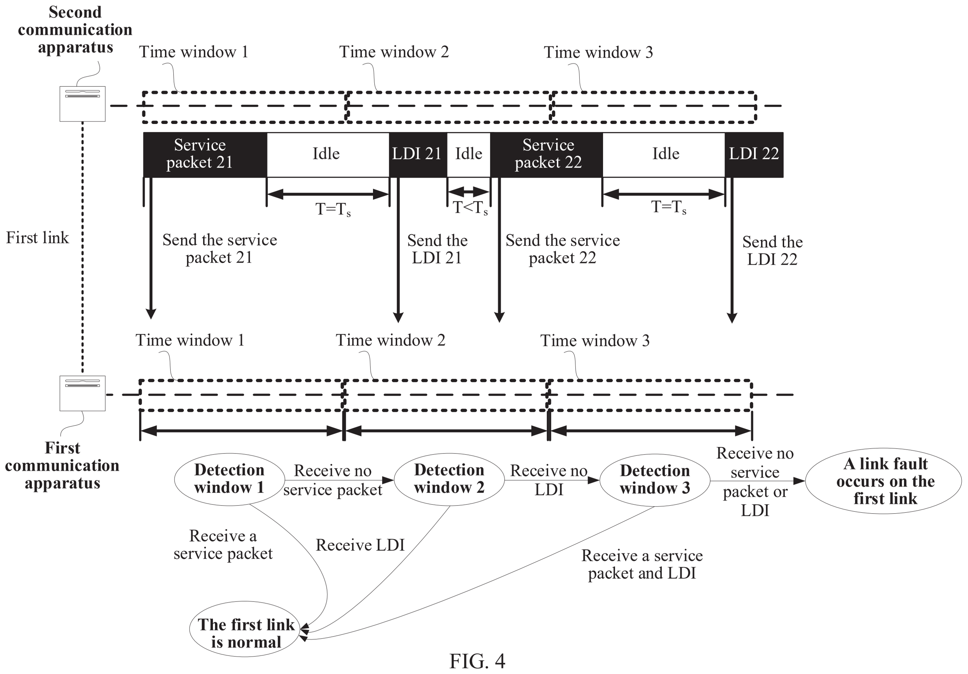

FIG. 4 shows an example 2 of the fault detection method. In the example shown in FIG. 4, the second communication apparatus irregularly needs to send a service packet (which may be referred to as a non-line-rate packet) to the first communication apparatus through the first link. As shown in FIG. 4, a plurality of consecutive time windows are shown: a time window 1, a time window 2, a time window 3, and the like.

In the time window 1, there is one service packet 21 that needs to be sent by the second communication apparatus, and the second communication apparatus sends the service packet 21 to the first communication apparatus through the first link. Then, the first link is idle.

If the first communication apparatus receives the service packet 21 in the time window 1 (which may be referred to as a detection window 1), it may be determined that the first link is normal.

Then, the time window 2 is entered, and the idle duration T of the first link reaches the link idle duration threshold Tₛ. The second communication apparatus actively generates one piece of link detection information LDI 21, and sends the LDI 21 to the first communication apparatus through the first link. Then, the first link is idle. When the first link is idle for duration T (in this case, T<Tₛ), and a service packet 22 that needs to be sent by the second communication apparatus appears, the second communication apparatus sends the service packet 22 to the first communication apparatus through the first link.

If the first communication apparatus receives the LDI 21 in the time window 2 (which may be referred to as a detection window 2), it may be determined that the first link is normal.

Then, the time window 3 is entered. In the time window 3, transmission of the service packet 22 ends, and then the first link is idle. The idle duration T of the first link reaches the link idle duration threshold Tₛ again. The second communication apparatus actively generates one piece of link detection information LDI 22, and sends the LDI 22 to the first communication apparatus through the first link.

If the first communication apparatus receives the service packet 22 in the time window 3 (which may be referred to as a detection window 3), it may be determined that the first link is normal. Alternatively, when transmission of the LDI 22 in the time window 3 ends, if the first communication apparatus may receive the service packet 2 and the LDI 22 in the time window 3, it may also be determined that the first link is normal.

Then, a subsequent time window continues to be entered. The subsequent time window is similar to the time windows 1, 2, and 3.

In this example, if the first communication apparatus does not receive, in a plurality of consecutive time windows such as the time window 1 and the time window 2, or the time window 1, the time window 2, and the time window 3, data sent by the second communication apparatus through the first link, it may be determined that a link fault occurs on the first link.

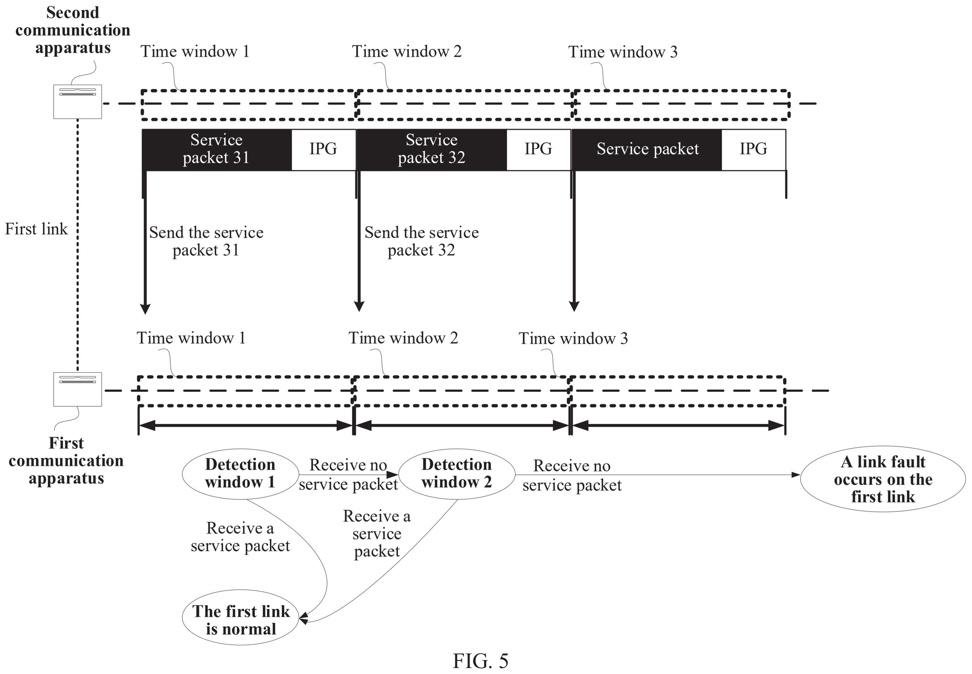

FIG. 5 shows an example 3 of the fault detection method. In the example shown in FIG. 5, the second communication apparatus periodically needs to send a service packet (for example, there is always a service packet sent at a line rate) to the first communication apparatus through the first link. As shown in FIG. 5, a plurality of consecutive time windows are shown: a time window 1, a time window 2, a time window 3, and the like.

In the time window 1, there is one service packet 31 that needs to be sent by the second communication apparatus, and the second communication apparatus sends the service packet 31 to the first communication apparatus through the first link. Then, an inter-packet gap IPG is entered.

If the first communication apparatus receives the service packet 31 in the time window 1 (which may be referred to as a detection window 1), it may be determined that the first link is normal.

Then, the time window 2 is entered. After the inter-packet gap IPG ends, there is a service packet 32 that needs to be sent by the second communication apparatus, and the second communication apparatus sends the service packet 32 to the first communication apparatus through the first link. Then, an inter-packet gap IPG is entered.

If the first communication apparatus receives the service packet 32 in the time window 2 (which may be referred to as a detection window 2), it may be determined that the first link is normal.

Then, the time window 3 is entered. The time window 3 and subsequent time windows are similar to the time windows 1 and 2.

In this example, if the first communication apparatus does not receive, in a plurality of consecutive time windows such as the time window 1 and the time window 2, or the time window 1, the time window 2, and the time window 3 (which may be referred to as a detection window 3), data sent by the second communication apparatus through the first link, it may be determined that a link fault occurs on the first link.

In this embodiment of this application, the second communication apparatus may send the link detection information through a reconciliation sublayer (reconciliation sublayer, RS). A network model includes a plurality of layers, such as a physical layer, a data link layer, a network layer, a transport layer, a session layer, a presentation layer, and an application layer. The network layer, the transport layer, the session layer, the presentation layer, and the application layer comply with the transmission control protocol/internet protocol (Transmission Control Protocol/Internet Protocol, TCP/IP protocol), and the physical layer and the data link layer each comply with a network protocol. The data link layer includes a MAC layer. In the Ethernet, packets generated and sent by the MAC layer comply with an Ethernet packet format defined in the Ethernet standard such as IEEE 802.3 (one Ethernet frame includes at least 84 bytes in consideration of a preamble and an inter-packet gap). The physical layer includes an RS layer.

In this embodiment, the link detection information sent by using the RS may not be limited by the Ethernet packet format, and a size of the link detection information may be relatively small, for example, 16 bytes, 8 bytes, or 5 bytes. Compared with the foregoing link detection protocol such as OAM in which an OAM packet (complying with an Ethernet packet format defined in the Ethernet standard such as IEEE 802.3) is generated and sent by using a MAC layer, in this embodiment of this application, a data volume of the link detection information is relatively small, a quantity of bandwidth resources consumed for transmitting the link detection information may be relatively small, and a transmission speed may be higher, so that bandwidth resources occupied in a link fault detection process can be further reduced, and a link fault detection speed can be increased.

The following mainly describes in detail the link detection information in embodiments of this application with reference to FIG. 6 and FIG. 7 by using an example in which a network is an Ethernet.

In this embodiment of this application, when the network is the Ethernet, the link detection information may be carried in a preamble defined in the Ethernet standard (for example, IEEE 802.3). The link detection information may be carried in the preamble in a plurality of implementations. For example, the link detection information may be a preamble defined in a standard, or the link detection information may be a modified preamble obtained by modifying a preamble. Modifying the preamble may include a modification manner such as deleting a byte in the preamble, modifying the preamble to insert or add information, or the like (the modified preamble byte or the added information may be referred to as a detection code). Using the link detection information carried in the preamble can be compatible with an Ethernet standard, so that all network devices in the Ethernet can support reception of the link detection information, and the solution has relatively high universal applicability.

FIG. 6 is a diagram 1 of link detection information, where link detection information in a plurality of formats is shown. The following describes in detail the plurality of formats of the link detection information with reference to FIG. 6.

In some implementations, as shown in 610 in FIG. 6, the link detection information is a preamble defined in the Ethernet standard. The preamble defined in the Ethernet standard (for example, IEEE 802.3) includes a 7-byte preamble and a 1-byte SFD. A value of each byte of the preamble is 0x55, and a value of the byte of the SFD is 0xD5.

In some other implementations, as shown in 620 in FIG. 6, the link detection information is a modified preamble obtained by deleting a byte in a preamble. Generally, one or more bytes other than the first two bytes in the preamble are deleted.

In some other implementations, as shown in 630 in FIG. 6, the link detection information is a modified preamble obtained by modifying one or more bytes (which usually may be one or more bytes other than the first two bytes) in a preamble. Modifying the byte of the preamble may be modifying a value of the byte of the preamble from 0x55 to other information.

In some other implementations, as shown in 640 in FIG. 6, the link detection information is a modified preamble obtained by deleting one or more bytes (which usually may be one or more bytes other than the first two bytes) in a preamble and modifying one or more remaining bytes (which usually may be one or more bytes other than the first two bytes) in the preamble. Similar to the foregoing modification, modifying the byte of the preamble may be modifying a value of the byte of the preamble from 0x55 to other information.

In some other implementations, as shown in 650 in FIG. 6, the link detection information is a modified preamble obtained by adding other information after the SFD byte.

The other information inserted or added to the preamble may be set according to a requirement, for example, may be a value such as 0 or 1, or may be other information that needs to be inserted into the preamble. The other information inserted or added to the preamble may be represented by a seq field.

Any two or more of the foregoing plurality of modification manners may be combined to modify the preamble, to obtain a modified preamble as the link detection information.

In some implementations, the link detection information may include information with specific usage, where the specific usage may include a purpose other than fault detection, for example, node role identification, link capability negotiation between communication apparatuses at two ends of a link, and information check.

FIG. 7 is a diagram 2 of link detection information, where link detection information including a plurality of types of usage information is shown. With reference to FIG. 7, the following describes in detail the link detection information including a plurality of types of usage information.

In some implementations, the link detection information may include a role type of the second communication apparatus. The role type may indicate a role of a node that sends the link detection information, for example, a master node (master, where a communication apparatus may be a master switch when being implemented on a switch) or a slave node (slave, where a communication apparatus may be a slave switch when being implemented on a switch). After receiving the link detection information sent by the second communication apparatus, the first communication apparatus may determine a role of the second communication apparatus and a role of the first communication apparatus based on the role type included in the link detection information.

In a specific embodiment, the role type may be carried in a type (type) field, and the link detection information may include the type field.

For example, the link detection information is carried in a preamble. The role type (for example, a type field carrying the role type) may be inserted or added to the preamble by using any feasible method (for example, any method or a combination of a plurality of methods in FIG. 6) for inserting or adding other information to the preamble.

As shown in 710 in FIG. 7, the link detection information is a modified preamble, the role type of the second communication apparatus is carried in a type field, and the type field is inserted into a preamble byte of a preamble.

In some implementations, the link detection information may include link capability information of the second communication apparatus. The link capability information of the communication apparatus may include information about a working mode that can be supported by the communication apparatus, for example, may include information such as a duplex mode, a data transmission rate, and flow control of the communication apparatus. After receiving the link detection information sent by the second communication apparatus, the first communication apparatus may implement link capability negotiation between the first communication apparatus and the second communication apparatus based on the link capability information included in the link detection information. Link capability negotiation can achieve that two communication apparatuses at link endpoints exchange link capability information and reach an agreement on a group of configuration parameters for link transmission.

In a specific embodiment, the link detection information may include a type field indicating an information type and a field indicating information content. The first communication apparatus may identify, by using the type field, that an information type of information carried after the type field is the link capability information.

The link capability information may be carried in the type field indicating the information type (in this case, the field indicates that the information type is link capability information) and the field indicating the information content (in this case, the information content indicated by the field is information content of the link capability information).

For example, the link detection information is carried in a preamble. The link capability information may be inserted or added to the preamble by using any feasible method (for example, any method or a combination of a plurality of methods in FIG. 6) for inserting or adding other information to the preamble.

As shown in 720 in FIG. 7, the link detection information is a modified preamble, the link capability information of the second communication apparatus is carried in a type field indicating an information type and a field indicating information content (in 720, a seq field indicates a field indicating information content), and the type field and the seq field are inserted into a preamble byte of the preamble.

In some implementations, the link detection information may include a cyclic redundancy check (cyclic redundancy check, CRC). The CRC may be generated based on correct link detection information and other information carried in the link detection information, and is used to check whether link detection information received by using a receiving method and other information carried in the link detection information are correct.

In a specific embodiment, for example, the link detection information is carried in a preamble. The CRC may be inserted or added to the preamble by using any feasible method (for example, any method or a combination of a plurality of methods in FIG. 6) for inserting or adding other information to the preamble.

As shown in 730 in FIG. 7, a CRC is added after a preamble defined in the Ethernet standard. The modified preamble may be link detection information, where the CRC is used to check the link detection information.

Further, as shown in 740 in FIG. 7, the link detection information is a modified preamble, and includes a field (represented by a seq field in 740) that carries one or more pieces of usage information and a CRC, and the seq field and the CRC are inserted into a preamble byte of the preamble. The CRC is used to check the link detection information and other information (including the seq field) carried in the link detection information.

Further, as shown in 750 in FIG. 7, the link detection information is a modified preamble, includes a type field indicating an information type and a field indicating information content (in 750, a seq field indicates the field indicating information content), and further includes a CRC, and the type field, the seq field, and the CRC are inserted into a preamble byte of the preamble. The CRC is used to check the link detection information and other information (including the type field and the seq field) carried in the link detection information.

In some implementations, when the link detection information is obtained by adding a CRC after a preamble defined in the Ethernet standard (for example, the link detection information shown in 730 in FIG. 7), after receiving the link detection information sent by the second communication apparatus, the first communication apparatus may check, based on the CRC, whether the link detection information is correct. When the link detection information carries the foregoing other information and includes a CRC (for example, the link detection information shown in 740 and 750 in FIG. 7), after receiving the link detection information sent by the second communication apparatus, the first communication apparatus may further check, based on the CRC, whether the carried other information is correct.

Based on this, an embodiment of this application may further provide a link detection method. The link detection method includes: If a first communication apparatus receives, in one time window or N consecutive time windows (N is greater than or equal to 2), M pieces of link detection information sent by a second communication apparatus (M is greater than or equal to 2, and a specific value may be determined based on an actual situation, for example, 2 or 3), and check results of the plurality of pieces of received link detection information are all incorrect, it may be considered that the first link has poor link quality or information is damaged due to a problem. In this case, the first communication apparatus may determine that communication quality of the first link is poor or a problem occurs on the first link. Then, the first link may be processed to recover communication quality, or it may be determined that the first link is unavailable or is not suitable for transmitting information/data, and then network communication between devices is recovered in a timely manner by using a recovery technology such as folding switchover or common fault switchover.

The link detection method may further include: If the first communication apparatus receives, in one time window or N consecutive time windows, the M pieces of link detection information sent by the second communication apparatus, and check results of the plurality of pieces of received link detection information are all correct, it may be considered that communication quality of the first link is normal or good.

The steps of the fault detection method provided in embodiments of this application and the steps of the link detection method provided in this embodiment of this application herein may be used separately or in combination. In this way, the first communication apparatus can check, in a timely manner based on the CRC, whether the link detection information and other information carried in the link detection information are damaged in a transmission process (for example, information distortion is caused by an accident such as a bit error), to ensure accuracy of the link detection information and the other information carried in the link detection information. In addition, whether the communication quality of the first link is poor can be relatively accurately determined based on a check result. This can help perform timely processing when the communication quality of the first link is poor, and help ensure data security and accuracy in a data transmission process.

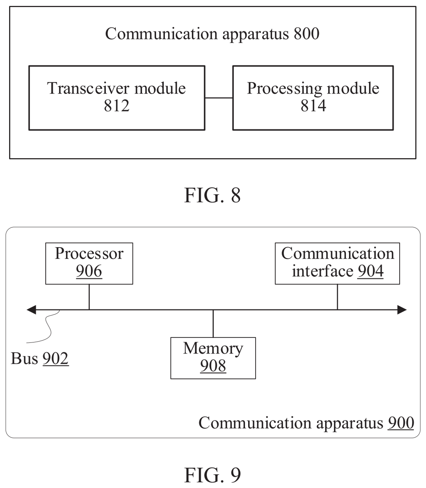

With reference to FIG. 2 to FIG. 7, the foregoing describes in detail the fault detection method provided in embodiments of this application and the implementations of the fault detection method. The following describes apparatuses provided in this application with reference to FIG. 8. These apparatuses may be configured to implement functions of any communication apparatus (for example, the first communication apparatus or the second communication apparatus) in the foregoing method embodiments, and therefore can also achieve the beneficial effects of the foregoing method embodiments.

FIG. 8 is a diagram of modules of a communication apparatus according to an embodiment of this application. The communication apparatus 800 can be configured to implement functions performed by any one of the foregoing communication apparatuses (for example, the first communication apparatus or the second communication apparatus).

As shown in FIG. 8, the communication apparatus 800 includes a transceiver module 812 and a processing module 814.

In a possible implementation, the communication apparatus 800 is used as the second communication apparatus. The processing module 814 is configured to: in any time window, when a service packet needs to be sent, indicate the transceiver module 812 to send the service packet to a first communication apparatus through a first link, and not generate link detection information. The processing module 814 is further configured to: in any time window, when no service packet needs to be sent, actively generate link detection information, and indicate the transceiver module 812 to send the link detection information to a first communication apparatus through a first link. The transceiver module 812 is configured to send data (including no service packet, link detection information, or the like) according to an indication of the processing module 814.

In some implementations, the processing module 814 may be configured to indicate the transceiver module 812 to send the link detection information to the first communication apparatus through a reconciliation sublayer RS. The transceiver module 812 may be configured to send the link detection information to the first communication apparatus through the reconciliation sublayer RS.

In some implementations, the link detection information is carried in a preamble. The link detection information may further include link capability information of the second communication apparatus. The link capability information may be carried in a type field indicating an information type and a field indicating information content. The link detection information may further include a role type of the second communication apparatus. The role type may be carried in the type field. The link detection information may further include a cyclic redundancy check CRC.

In some implementations, the processing module 814 is further configured to: when idle duration of the first link is greater than a link idle duration threshold, actively generate the link detection information, and indicate the transceiver module 812 to send the link detection information to the first communication apparatus through the first link. The link idle duration threshold is less than duration of the time window.

In some implementations, the processing module 814 is further configured to configure duration of the time window based on one or more of a maximum transmission unit MTU, a link bandwidth, and a link idle duration threshold. In addition, the processing module 814 may be further configured to adjust the duration of the time window based on one or more of an updated MTU, an updated link bandwidth, and an updated link idle duration threshold.

In a possible implementation, the communication apparatus 800 is used as the first communication apparatus. The transceiver module 812 is configured to receive data (including no service packet, link detection information, or the like) sent by a second communication apparatus to the first communication apparatus through a first link.

The processing module 814 is configured to perform fault detection on the first link between the first communication apparatus and the second communication apparatus based on the following conditions: condition 1: link detection information sent by the second communication apparatus is not received but a service packet sent by the second communication apparatus is received through the first link in one time window; condition 2: a service packet sent by the second communication apparatus is not received but link detection information sent by the second communication apparatus is received through the first link in one time window; and condition 3: no data sent by the second communication apparatus is received through the first link in N consecutive time windows, where N is greater than or equal to 2. When the condition 1 or the condition 2 is met, it is determined that the first link is normal. When the condition 3 is met, it is determined that a link fault occurs on the first link. In some implementations, the link detection information may further include a cyclic redundancy check CRC. The processing module 814 is further configured to check the link detection information based on the CRC.

Alternatively, the processing module 814 is configured to detect communication quality of the first link based on the following condition: when M pieces of link detection information sent by the second communication apparatus are received through the first link in one time window or N consecutive time windows, the link detection information includes a cyclic redundancy check CRC, and check results of the M pieces of link detection information that are checked based on the CRC are all incorrect, determining that communication quality of the first link is poor. M is greater than or equal to 2.

In some implementations, the link detection information is from a reconciliation sublayer RS. The link detection information may be carried in a preamble.

In some implementations, the processing module 814 is further configured to configure duration of the time window based on one or more of a maximum transmission unit MTU, a link bandwidth, and a link idle duration threshold. In addition, the processing module 814 may be further configured to adjust the duration of the time window based on one or more of an updated MTU, an updated link bandwidth, and an updated link idle duration threshold.

In some implementations, the link detection information may further include link capability information of the second communication apparatus. The link capability information may be carried in a type field indicating an information type and a field indicating information content. The processing module 814 is further configured to implement link capability negotiation between the first communication apparatus and the second communication apparatus based on the link capability information.

In some implementations, the link detection information may further include a role type of the second communication apparatus. The role type may be carried in the type field. The processing module 814 is further configured to determine a role of the second communication apparatus and a role of the first communication apparatus based on the role type.

For more specific descriptions of functions performed by the communication apparatus, refer to related descriptions of the fault detection method (or the link detection method) provided in FIG. 2 to FIG. 7 and implementations of the fault detection method.

The apparatus may be implemented by using software, or may be implemented by using hardware, or may be implemented by using a combination of software and hardware. For example, the following describes an implementation of the communication apparatus 800.

The modules may be implemented by using software, or may be implemented by using hardware, or may be implemented by using a combination of software and hardware. For example, the following describes implementations of the transceiver module 812 and the processing module 814.

A module is used as an example of a software functional unit, and the transceiver module 812 or the processing module 814 may include code running on a device instance. The device instance may be at least one of a physical device (for example, a switch, a router, or a server) or a virtualized device (for example, a virtual machine). Further, there may be one or more device instances. For example, the transceiver module 812 or the processing module 814 may include code running on a plurality of physical devices/virtualized devices.

A module is used as an example of a hardware functional unit, and the transceiver module 812 or the processing module 814 may include at least one hardware device. For example, the transceiver module 812 may include a network interface card, a transceiver, or the like. The processing module 814 may include any one or more of processors such as a central processing unit (central processing unit, CPU), a digital signal processor (digital signal processor, DSP), a network processor (network processor, NP), a neural-network processing unit (neural-network processing unit, NPU), a data processing unit (Data Processing Unit, DPU), and a microprocessor (microprocessor, MP). Alternatively, the processing module 814 may be a device or a component implemented by using an application-specific integrated circuit (application-specific integrated circuit, ASIC) or a programmable logic device (programmable logic device, PLD).

An embodiment of this application further provides a communication apparatus 900. The communication apparatus 900 is an example of a hardware device. The communication apparatus 900 provided in this embodiment of this application may be used as any device or apparatus (for example, the network device, the first communication apparatus, or the second communication apparatus described above) that has communication and processing capabilities and that is provided in embodiments of this application. Any communication apparatus (for example, the first communication apparatus or the second communication apparatus described above) provided in embodiments of this application may be implemented on the communication apparatus 900.

As shown in FIG. 9, the communication apparatus 900 includes a bus 902, a communication interface 904, a processor 906, and a memory 908. The communication interface 904, the processor 906, and the memory 908 communicate with each other by using the bus 902. It should be understood that quantities of processors and memories in the communication apparatus 900 are not limited in this application. Optionally, the processor 906 in the communication apparatus 900 may be connected to a display and an input device (not shown in FIG. 9) through the communication interface 904.

The bus 902 may be classified into an address bus, a data bus, a control bus, or the like. For ease of representation, only one line is used for representation in FIG. 9, but this does not mean that there is only one bus or only one type of bus. The bus 902 may include a path for transmitting information between components (for example, the communication interface 904, the processor 906, and the memory 908) of the communication apparatus 900.

The communication interface 904 uses a transceiver module, for example, but not limited to, a network interface card or a transceiver, to implement communication between the communication apparatus 900 and a device or a communication network. The communication interface 904 may include a wired communication interface, or may include a wireless communication interface. Specifically, the communication interface 904 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area networks, WLAN) interface, a cellular network communication interface, or a combination thereof. The Ethernet interface may be an optical interface, an electrical interface, or a combination thereof.

The display may include various display devices that can implement a display function, such as a plasma display and a liquid crystal display. The communication apparatus 900 may implement a display function by using the display. The input device may include various input devices that can implement information/signal input, such as a keyboard, a mouse, and a touchscreen.

The processor 906 may include a CPU, a DSP, an NP, an NPU, a DPU, an MP, or one or more integrated circuits configured to implement the solutions of this application. For example, the processor 906 includes an ASIC, a PLD or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination including one or more microprocessors, or a combination of a DSP and a microprocessor. In embodiments of this application, the processor 906 may be configured to perform steps or operations in the fault detection method (or the link detection method) provided in FIG. 2 to FIG. 7 in embodiments of this application.

The memory 908 may include a volatile memory (volatile memory), for example, a random access memory (random access memory, RAM). The memory 908 may further include a non-volatile memory (non-volatile memory), for example, a read-only memory (read-only memory, ROM), a flash memory, a mechanical hard disk drive (hard disk drive, HDD), or a solid state drive (solid state drive, SSD). Alternatively, the memory 908 is any other medium that can carry or store expected program code in a form of an instruction or a data structure and that can be accessed by a computer.

The memory 908 may store program code for performing the solutions of this application, and the processor 906 may execute the program code stored in the memory 908. In other words, the communication apparatus 900 may implement, by using the processor 906 and the program code in the memory 908, steps or operations in the fault detection method (or the link detection method) provided in FIG. 2 to FIG. 7 in embodiments of this application. The program code may include one or more software modules. Optionally, the processor 906 may also store program code or instructions for performing the solutions of this application.

In a specific embodiment, the communication apparatus 900 may correspond to any one of the foregoing communication entities (for example, the first communication entity, the second communication entity, the third communication entity, the fourth communication entity, the fifth communication entity, or the access control entity), and the processor 906 reads instructions in the memory 908, so that the communication apparatus 900 can perform an operation performed by any communication entity.

In a specific embodiment, the memory 908 stores executable program code used to implement functions of the transceiver module 812 and the processing module 814. The processor 906 executes the executable program code to implement the functions of the transceiver module 812 and the processing module 814.

An embodiment of this application further provides a communication apparatus 1000. The communication apparatus 1000 is another example of a hardware device. The communication apparatus 1000 provided in this embodiment of this application may be used as a network device (for example, a switch or a router) in embodiments of this application. Any communication apparatus (for example, the first communication apparatus or the second communication apparatus described above) provided in embodiments of this application may be implemented on the communication apparatus 1000.

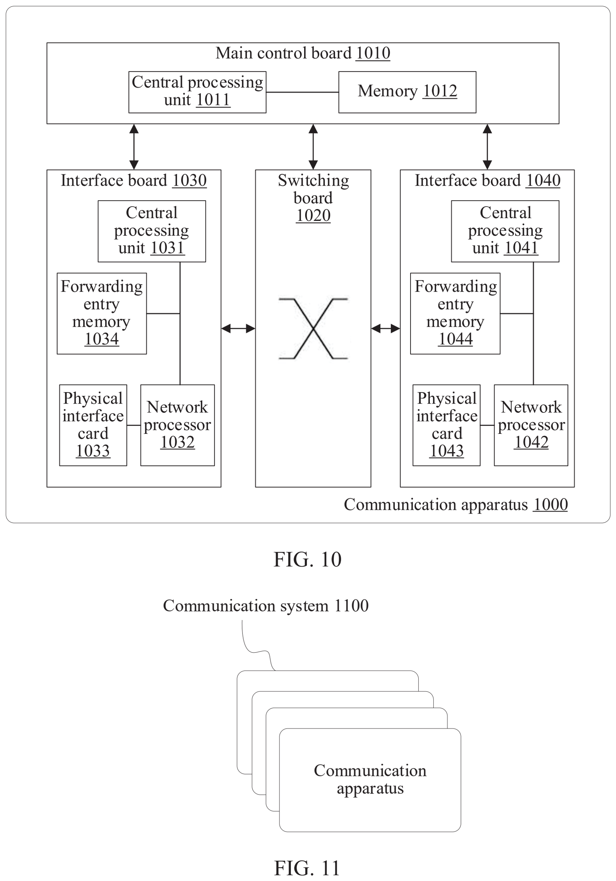

As shown in FIG. 10, the communication apparatus 1000 includes a main control board 1010 and an interface board 1030.

The main control board 1010 is also referred to as a main processing unit (main processing unit, MPU) or a route processor card (route processor card). Control and management performed by the main control board 1010 on components in the communication apparatus 1000 include route computation, device management, device maintenance, and protocol processing functions. The main control board 1010 includes a central processing unit 1011 and a memory 1012.

The interface board 1030 is also referred to as a line processing unit (line processing unit, LPU), a line card (line card), or a service board. The interface board 1030 is configured to provide various service interfaces and forward a data packet. The service interface includes but is not limited to an Ethernet interface, a POS (Packet over SONET/SDH) interface, or the like. The Ethernet interface is, for example, a flexible Ethernet service interface (Flexible Ethernet Clients, FlexE Clients). The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030, and communicate with the central processing unit 1011 on the main control board 1010.

The network processor 1032 is configured to implement packet forwarding processing. The network processor 1032 may be in a form of a forwarding chip. Specifically, the network processor 1032 is configured to forward a received packet based on a forwarding table stored in the forwarding entry memory 1034. If a destination address of the packet is an address of the communication apparatus 1000, the network processor 1032 sends the packet to a CPU (for example, the central processing unit 1011) for processing. If a destination address of the packet is not an address of the communication apparatus 1000, the network processor 1032 searches, based on the destination address, for a next hop and an outbound interface corresponding to the destination address in the forwarding table, and forwards the packet to the outbound interface corresponding to the destination address. Processing on an uplink packet includes processing at a packet ingress interface and forwarding table lookup, and processing on a downlink packet includes forwarding table lookup and the like.

The physical interface card 1033 is configured to implement an interconnection function at a physical layer. Original traffic enters the interface board 1030 from the physical interface card 1033, and a processed packet is sent from the physical interface card 1033. The physical interface card 1033 is also referred to as a sub-card, may be installed on the interface board 1030, and is responsible for converting an optical/electrical signal into a packet, performing validity check on the packet, and forwarding the packet to the network processor 1032 for processing. In some embodiments, the central processing unit may also perform a function of the network processor 1032, for example, implement software forwarding based on a general-purpose CPU. In this case, the network processor 1032 is not required on the physical interface card 1033.

Optionally, the communication apparatus 1000 includes a plurality of interface boards. For example, the communication apparatus 1000 further includes an interface board 1040. The interface board 1040 includes a central processing unit 1041, a network processor 1042, a forwarding entry memory 1044, and a physical interface card 1043.

Optionally, the communication apparatus 1000 further includes a switching board 1020. The switching board 1020 may also be referred to as a switch fabric unit (switch fabric unit, SFU). When the communication device has a plurality of interface boards 1030, the switching board 1020 is configured to complete data exchange between the interface boards. For example, the interface board 1030 and the interface board 1040 may communicate with each other through the switching board 1020.

The main control board 1010 is coupled to the interface board 1030. For example, the main control board 1010, the interface board 1030, the interface board 1040, and the switching board 1020 are connected to a system backplane through a system bus to implement interworking. In a possible implementation, an inter-process communication (inter-process communication, IPC) channel is established between the main control board 1010 and the interface board 1030, and communication is performed between the main control board 1010 and the interface board 1030 through the IPC channel.

Logically, the communication apparatus 1000 includes a control plane and a forwarding plane. The control plane includes the main control board 1010 and the central processing unit 1031. The forwarding plane includes components used for forwarding, for example, the forwarding entry memory 1034, the physical interface card 1033, and the network processor 1032. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 1032 searches the forwarding table delivered by the control plane to forward a packet received by the physical interface card 1033. The forwarding table delivered by the control plane may be stored in the forwarding entry memory 1034. In some embodiments, the control plane and the forwarding plane may be completely separated, and are not on a same device.

In this embodiment of this application, operations on the interface board 1040 are consistent with operations on the interface board 1030. For brevity, details are not described again. The communication apparatus 1000 in this embodiment may correspond to the communication apparatus in the foregoing method embodiments, and the main control board 1010 and the interface board 1030 and/or 1040 in the communication apparatus 1000 may implement functions of the communication apparatus and/or various steps implemented by the communication apparatus in the foregoing method embodiments. For brevity, details are not described herein again.

It should be noted that there may be one or more main control boards. When there are a plurality of main control boards, the main control boards may include an active main control board and a standby main control board. There may be one or more interface boards. A communication apparatus having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need the switching board, and the interface board provides a function of processing service data in an entire system. In a distributed forwarding architecture, the communication apparatus may have at least one switching board, and data exchange between a plurality of interface boards is implemented by using the switching board, to provide a large-capacity data exchange and processing capability. Therefore, a data access and processing capability of a communication apparatus in the distributed architecture is better than that of a device in the centralized architecture. Optionally, the communication apparatus may alternatively be in a form in which there is only one card. To be specific, there is no switching board, and functions of the interface board and the main control board are integrated on the card. In this case, a central processing unit on the interface board and a central processing unit on the main control board may be combined into one central processing unit on the card, to perform functions obtained after the two central processing units are combined. The device of this form (for example, a communication apparatus such as a low-end switch or a router) has a weak data exchange and processing capability. A specific architecture that is to be used depends on a specific networking deployment scenario. This is not limited herein.

In a specific embodiment, any one of the foregoing communication apparatuses (for example, the first communication apparatus or the second communication apparatus) may be implemented on the communication apparatus 1000. The memory 1012 of the main control board 1010 can store instructions used to implement functions performed by the foregoing communication entity (for example, instructions used to implement functions of the transceiver module 812 and the processing module 814). The central processing unit 1011 of the main control board 1010 executes the instructions in the memory 1012, and can perform, together with other components such as the interface board 1030 and the switching board 1020, the functions performed by the foregoing communication apparatus.

In some possible implementations, any communication apparatus provided in embodiments of this application may be a virtualized device. For example, the virtualized device may be a virtual machine (Virtual Machine, VM), and the virtual machine is deployed on a hardware device (for example, a physical host). The virtual machine is a complete software-simulated computer system that has complete hardware system functions and that runs in an entirely isolated environment. The virtual machine may be configured as the communication apparatus in embodiments of this application. For example, each communication apparatus may be implemented based on a general-purpose physical host in combination with a network function virtualization (Network Function Virtualization, NFV) technology. The communication apparatus is a virtual host, a virtual router, or a virtual switch. A person skilled in the art may virtualize, on a general-purpose physical host with reference to the NFV technology by reading this application, communication apparatuses having the functions in embodiments of this application.

In some possible implementations, any communication apparatus provided in embodiments of this application may be a processor or a chip. The chip may include a processor and a power supply circuit, and the power supply circuit is configured to supply power to the processor. In a specific embodiment, the processor or the chip may correspond to any one of the foregoing communication apparatuses (for example, the first communication apparatus or the second communication apparatus), and the processor or the chip can perform an operation performed by any communication apparatus.

An embodiment of this application further provides a communication system 1100. As shown in FIG. 11, the communication system includes one or more communication apparatuses. The communication apparatus may be any one or combination of the communication apparatus 900 or the communication apparatus 1000. A combination of one or more communication apparatuses may jointly perform the fault detection method (or the link detection method) provided in FIG. 2 to FIG. 7 in embodiments of this application.

A memory in the one or more communication apparatuses in the communication system 1100 may store same instructions used to perform the fault detection method (or the link detection method) provided in FIG. 2 to FIG. 7 in embodiments of this application. Alternatively, a memory in the one or more communication apparatuses in the communication system 1100 may separately store some instructions used to perform the fault detection method (or the link detection method) provided in FIG. 2 to FIG. 7 in embodiments of this application. In other words, a combination of one or more communication apparatuses may jointly perform instructions used to implement the fault detection method (or the link detection method) provided in FIG. 2 to FIG. 7 in embodiments of this application.

In a specific embodiment, memories in different communication apparatuses in the communication system 1100 may store different instructions, and instructions stored in a memory in one communication apparatus may be used to implement functions of one or more of the foregoing communication apparatuses (for example, the first communication apparatus and the second communication apparatus). In other words, the instructions stored in the memory in the communication apparatus may implement functions of the transceiver module 812 and the processing module 814.

In some possible implementations, one or more communication apparatuses in the communication system 1100 may be connected by using a network. The network may be a wide area network, a local area network, or the like.

An embodiment of this application further provides another communication system. The communication system includes one or more processors and one or more memories. The one or more memories store instructions used to implement the fault detection method (or the link detection method) provided in FIG. 2 to FIG. 7 in embodiments of this application. The one or more processors can execute the instructions in the one or more memories to perform the fault detection method (or the link detection method) provided in FIG. 2 to FIG. 7 in embodiments of this application. For more related descriptions of implementations of the processor and the memory, refer to the foregoing related descriptions of the processor and the memory.

An embodiment of this application further provides a computer program product. The computer program product may be software or a program product that includes instructions and that can run on a communication apparatus or a processor (for example, run on the communication apparatus 900, the communication apparatus 1000, or one or more processors of the communication system 1100) or that is stored in any usable medium. The instructions included in the computer program product may include instructions used to perform steps or operations in the fault detection method (or the link detection method) provided in FIG. 2 to FIG. 7 in embodiments of this application. When the computer program product runs on a communication apparatus or a processor (for example, runs on the communication apparatus 900, the communication apparatus 1000, or one or more processors of the communication system 1100), steps or operations of the fault detection method (or the link detection method) provided in FIG. 2 to FIG. 7 in embodiments of this application are implemented.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions indicate a communication apparatus or a processor to perform steps or operations of the fault detection method (or the link detection method) provided in FIG. 2 to FIG. 7 in embodiments of this application.

Finally, it should be noted that the foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

In the specification, claims, and accompanying drawings of this application, the terms "first", "second", "third", "fourth", and the like are intended to distinguish between different objects but do not limit a particular order.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

## Claims

1. A fault detection method, wherein the method is performed by a first communication apparatus, and the method comprises:
performing fault detection on a first link between the first communication apparatus and a second communication apparatus based on the following conditions:
condition 1: link detection information sent by the second communication apparatus is not received but a service packet sent by the second communication apparatus is received through the first link in one time window;
condition 2: a service packet sent by the second communication apparatus is not received but link detection information sent by the second communication apparatus is received through the first link in one time window; and
condition 3: no data sent by the second communication apparatus is received through the first link in N consecutive time windows, wherein N is an integer greater than or equal to 2; and
when the condition 1 or the condition 2 is met, determining that the first link is normal;
when the condition 3 is met, determining that a link fault occurs on the first link.

2. The method according to claim 1, wherein the link detection information is carried in a preamble.

3. The method according to claim 1 or 2, wherein the link detection information is from a reconciliation sublayer RS.

4. The method according to any one of claims 1 to 3, wherein duration of the time window is configured based on one or more of a maximum transmission unit MTU, a link bandwidth, and a link idle duration threshold.

5. The method according to any one of claims 1 to 4, wherein the method further comprises: adjusting the duration of the time window based on one or more of an updated MTU, an updated link bandwidth, and an updated link idle duration threshold.

6. The method according to any one of claims 1 to 5, wherein the link detection information comprises link capability information of the second communication apparatus; and
after the first communication apparatus receives the link detection information sent by the second communication apparatus, the method further comprises:
implementing link capability negotiation between the first communication apparatus and the second communication apparatus based on the link capability information.

7. The method according to any one of claims 1 to 6, wherein the link detection information comprises a role type of the second communication apparatus; and
after the first communication apparatus receives the link detection information sent by the second communication apparatus, the method further comprises:
determining a role of the second communication apparatus and a role of the first communication apparatus based on the role type.

8. The method according to any one of claims 1 to 7, wherein the link detection information comprises a cyclic redundancy check CRC; and
after the first communication apparatus receives the link detection information sent by the second communication apparatus, the method further comprises:
checking the link detection information based on the CRC.

9. The method according to claim 8, wherein the method further comprises:
when M pieces of link detection information sent by the second communication apparatus are received through the first link in one time window or N consecutive time windows, and check results of the M pieces of link detection information are all incorrect, determining that communication quality of the first link is poor, wherein M is an integer greater than or equal to 2, and N is an integer greater than or equal to 2.

10. A fault detection method, wherein the method is performed by a second communication apparatus, and the method comprises:
in any time window, when a service packet needs to be sent, sending the service packet to a first communication apparatus through a first link, and skipping generating link detection information; or
in any time window, when no service packet needs to be sent, actively generating link detection information, and sending the link detection information to a first communication apparatus through a first link.

11. The method according to claim 10, wherein actively generating the link detection information, and sending the link detection information to the first communication apparatus through the first link comprise:
when idle duration of the first link is greater than or equal to a link idle duration threshold, actively generating the link detection information, and sending the link detection information to the first communication apparatus through the first link, wherein
the link idle duration threshold is less than duration of the time window.

12. The method according to claim 10 or 11, wherein the link detection information is carried in a preamble.

13. The method according to any one of claims 10 to 12, wherein the method comprises:
sending the link detection information to the first communication apparatus through a reconciliation sublayer RS.

14. A first communication apparatus, wherein configured to implement the method according to any one of claims 1 to 9.

15. A second communication apparatus, wherein configured to implement the method according to any one of claims 10 to 13.
